**Europäisches Patentamt**

**European Patent Office**

**Office européen des brevets**

(19)

(11) Numéro de publication: **0 261 028 B1**

# FASCICULE DE BREVET EUROPEEN

(12)

(45) Date de publication de fascicule du brevet:
**10.04.91**

(51) Int. Cl.5: **A01M 7/00**

(21) Numéro de dépôt: **87402049.8**

(22) Date de dépôt: **15.09.87**

(54) **Dispositif de fixation et de stabilisation de rampes de pulvérisation sur un véhicule porteur.**

(30) Priorité: **18.09.86 FR 8613201**

(43) Date de publication de la demande:
**23.03.88 Bulletin 88/12**

(45) Mention de la délivrance du brevet:
**10.04.91 Bulletin 91/15**

(84) Etats contractants désignés:
**AT BE CH DE ES FR GB GR IT LI LU NL SE**

(56) Documents cités:
**EP-A- 0 100 127          EP-A- 0 193 010**
**FR-A- 2 342 016          GB-A- 2 028 078**
**GB-A- 2 153 194          US-A- 4 598 830**

(73) Titulaire: **Belin, Jean-Pierre René**
**Briaucourt**
**F-52700 Andelot(FR)**

(72) Inventeur: **Belin, Jean-Pierre René**
**Briaucourt**
**F-52700 Andelot(FR)**

(74) Mandataire: **Gérardin, Robert Jean René**
**PROT'INNOV INTERNATIONAL SA Résidence**
**de l'Observatoire avenue Georges Clémen-**
**ceau Boîte Postale 2764**
**F-51066 Reims Cédex(FR)**

## Description

La présente invention concerne un dispositif de fixation et de stabilisation d'une rampe de pulvérisation ou d'épandage sur un véhicule porteur.

En agriculture, il est fréquent d'avoir à mettre en oeuvre, des rampes de pulvérisation ou d'épandage, lesquelles sont fixées à l'avant du tracteur mais également à l'arrière d'un véhicule tracté par celui-ci. Toutefois, les terrains agricoles, sur lesquels les véhicules porteurs évoluent, ne sont pas toujours parfaitement plats et sont souvent délimités par des talus ou des clôtures et sont, de plus, parfois encombrés de pylônes électriques. Aussi, lorsque les rampes sont fixées rigidement aux véhicules porteurs, ceux-ci retransmettent aux rampes toutes les irrégularités du sol: ce qui, lorsque lesdites rampes sont de grande envergure, engendre un effet de balancier, qui peut provoquer une mise en contact des extrémités de celles-ci avec le sol et entraîner des déformations ou des ruptures au niveau des points de fixation sur le véhicule porteur, et gêner considérablement le traitement des bandes ou des surfaces de terrains proches des talus, des clôtures et des pylônes.

Diverses solutions ont été développées pour permettre la modification, en cours d'utilisation, de la position des rampes par rapport aux véhicules porteurs et pour amortir, dans des directions bien précises, certains effets dûs aux irrégularités du sol. On connaît déjà un dispositif de suspension d'une rampe de pulvérisation agricole et une rampe comportant ce dispositif (demande de brevet français **FR-A-2.342.016**) correspondant au préambule de la revendication 1. Dans ce dispositif, la rampe de pulvérisation est articulée autour d'un axe sur un support fixe et assujettie à un support mobile ; deux amortisseurs sont agencés entre ces deux derniers éléments et sont propres à agir en sens opposé sur le support mobile. Et l'on connaît également un dispositif de suspension d'éléments de pulvérisation dispositif de suspension d'éléments de pulvérisation (brevet américain US-A-4.598.830) permettant de faire varier la hauteur des éléments par rapport au sol, indépendamment les uns des autres, par l'intermédiaire de deux vérins et d'un cadre comportant des doubles montants.

Cependant, ces solutions ne permettent pas un amortissement complet des rampes sur trois axes, et d'éviter le débattement latéral dit "coup de fouet", ni d'obtenir un effacement suffisant des rampes par rapport au sens de déplacement du véhicule porteur; en particulier pour éviter des obstacles latéraux ou ponctuels.

La présente invention a pour but de remédier à ces inconvénients. L'invention, telle qu'elle est caractérisée dans les revendications résout le problème consistant à créer un dispositif de fixation et de stabilisation d'une rampe de pulvérisation sur un véhicule porteur éliminant toute dépendance rigide avec celui-ci, dont la souplesse de suspension et la rapidité de réponse soient modulables pendant le déplacement du véhicule porteur, à partir du poste de conduite de celui-ci , ainsi que l'éffacement de la rampe lors de la présence d'obstacles.

Ce dispositif constitué, pour l'essentiel : d'un cadre comportant des montants assurant par l'intermédiaire de deux vérins montés en opposition, la stabilité transversale dans le plan vertical, est caractérisé en ce que le cadre comporte des doubles montants entre les éléments desquels est disposée une traverse mobile reliée au véhicule porteur par l'intermédiaire de vérins assurant la stabilité horizontale, de tourillons et d'une barre montée pivotante par rapport à un axe dont l'extrémité inférieure est solidaire de la traverse mobile et dont l'extrémité supérieure est reliée à la double traverse supérieure du cadre par l'intermédiaire des dits deux vérins montés en opposition et assurant la stabilité transversale dans le plan vertical ; et deux biellettes doubles, articulées l'une par rapport à l'autre, fixées rigidement et perpendiculairement, par leur extrémité libre, respectivement à la traverse inférieure du cadre et à la traverse mobile, rappelées dans l'alignement l'une par rapport à l'autre, par un vérin assurant la stabilité dans le plan vertical longitudinal.

Les rampes de pulvérisation ou d'épandage sont fixées au cadre par l'intermédiaire d'un oeil, situé à chacune des extrémités de la traverse inféieure, et par l'intermédiaire de câbles-haubans reliés aux extrémités de la double traverse supérieure du cadre par l'intermédiaire d'un vérin assurant la stabilité verticale de chaque rampe par rapport au cadre.

L'extrémité supérieure de l'axe, concourant à la stabilité transversale dans le plan vertical, fixé à la traverse mobile, dépasse de la double traverse supérieure du cadre entre les éléments de laquelle elle se déplace.

L'inclinaison du cadre, dans le plan longitudinal, est réglable par l'intermédiaire d'un vérin reliant la traverse inférieure du cadre au véhicule porteur, ou aux bras de manutention de celui-ci .

Selon un autre mode de réalisation préférentiel, l'inclinaison, dans le plan longitudinal du cadre, se règle par l'intermédiaire d'un parallélogramme déformable, dont ledit cadre constitue l'un des côtés, et d'un vérin assurant l'artitulation dudit parallélogramme déformable par rapport aux bras de manutention.

Les vérins équipant l'ensemble du dispositif sont reliés à une installation oléopneumatique à accumulateurs d'azote, leur permettant d'être utilisés à la fois comme amortisseurs et comme moyens de réglage en position de l'ensemble du dispositif par rapport au véhicule porteur et des rampes de pulvérisation ou d'épandage par rapport au sol.

Les avantages obtenus grâce à cette invention consistent essentiellement en ce que les rampes de pulvérisation ou d'épandage restent stables par rapport au sol, malgré les irrégularités de celui-ci, et peuvent être, à volonté, changées d'inclinaison par rapport au sol ou/et par rapport au véhicule porteur, individuellement ou collectivement, à partir du poste de conduite du véhicule, sans risque de débattement intempestif ou de " Coup de fouet ".

Les organes de fixation de la rampe sur le véhicule porteur ne subissent aucun effort de cisaillement et de déformation , et la souplesse de suspension est modulable.

D'autres caractéristiques et avantages apparaîtront dans la description qui va suivre d'un dispositif de fixation et de stabilisation d'une rampe de pulvérisation, sur l'avant d'un véhicule porteur équipé de bras de levage, donné à titre d'exemple non limitatif, au regard des dessins annexés sur lesquels :

- la figure 1 représente une vue de face du dispositif.
- la figure 2 représente une vue de côté du dispositif monté à l'extrémité des bras de manutention d'un véhicule porteur.
- la figure 3 représente une vue de dessus du dispositif.

Les figures représentent un dispositif de fixation et de stabilisation monté à l'avant des bras 1 d'un véhicule porteur 2 comprenant essentiellement un cadre 3 dans les doubles montants 3a et 3b duquel coulisse une traverse 4 reliée à l'avant des bras 1 du véhicule porteur par l'intermédiaire de vérins 5 assurant la stabilité latérale dans le plan horizontal, de tourillons 6 et 7 et d'une barre 8 montée pivotante par l'intermédiaire de roulements 9 et 10 par rapport à un axe 11 dont l'extrémité inférieure 11a est fixée à la traverse coulissante 4 perpendiculairement à celle-ci, et dont l'extrémité supérieure 11b est reliée à la double traverse supérieure 3c du cadre 3 par l'intermédiaire de deux vérins 12 assurant la stabilité latérale dans le plan vertical, et de deux biellettes doubles 13 et 14 fixées par l'une de leurs extrémités 13a et 14a respectivement à la traverse inférieure 3d du cadre 3 et à la traverse coulissante 4 et reliées entre elles par l'autre extrémité 13b et 14b par l'intermédiaire de tourillons 5 d'un vérin 17 et d'axes 18 et 19. La traverse inférieure 3d est reliée aux bras 1 du véhicule porteur par l'intermédiaire d'un oeil 20 et d'un vérin 21 de réglage du positionnement du cadre 3 dans le plan de déplacement du véhicule porteur Les rampes 22 et 23, fixées aux extrémités de la traverse inférieure 3d du cadre 3 par l'intermédiaire d'un oeil 26, sont maintenues dans le plan vertical par l'intermédiaire de vérins 24 et de câbles 25.

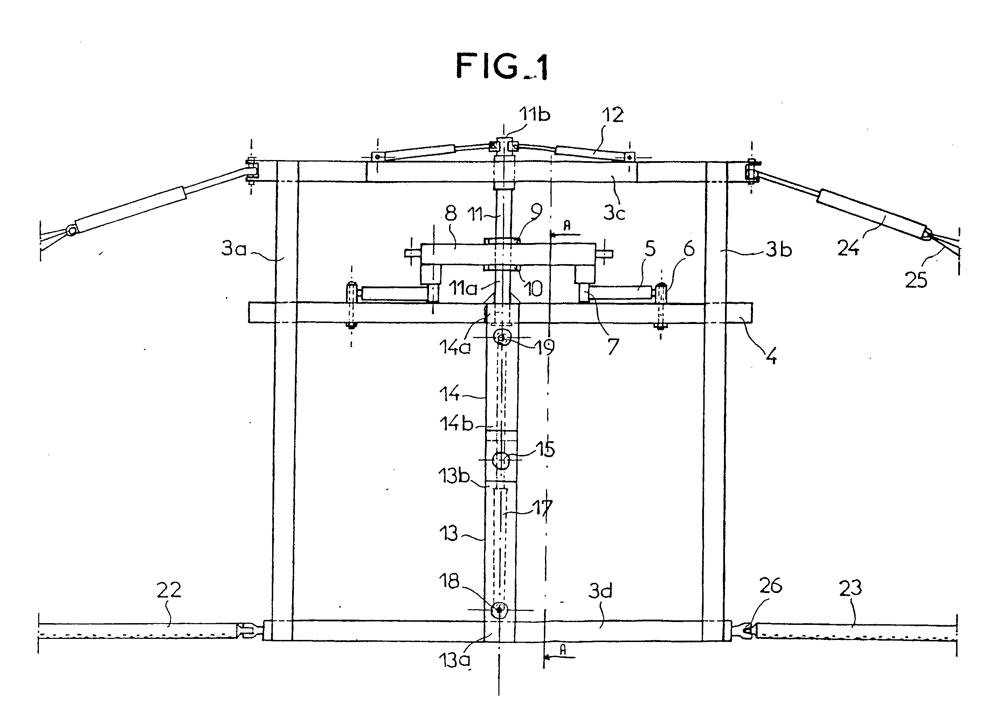

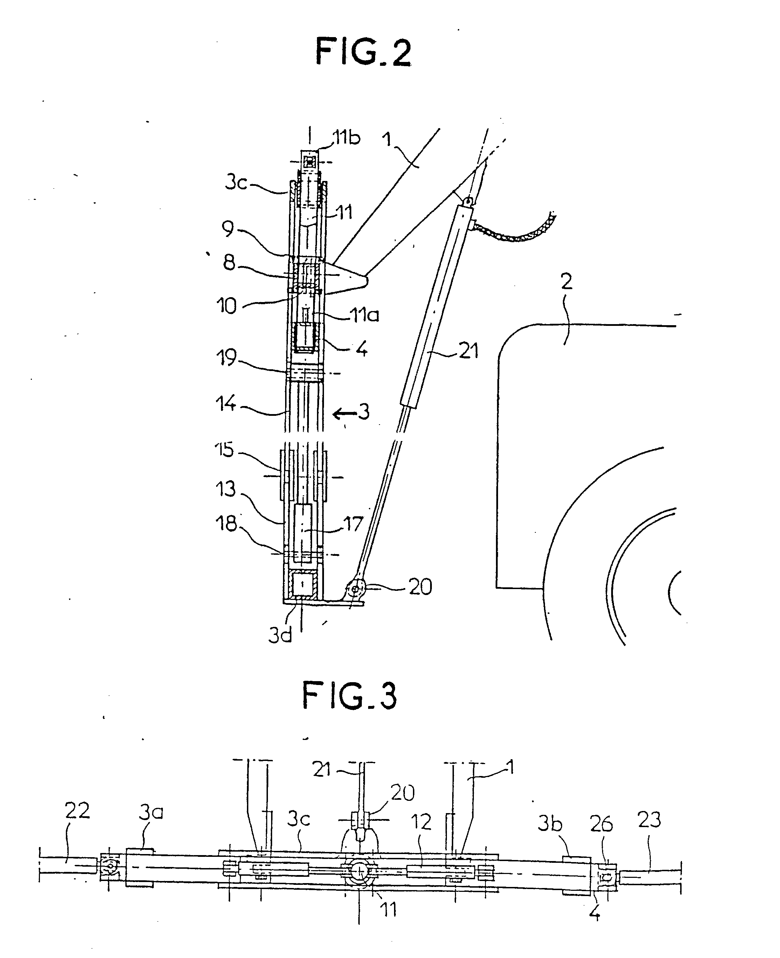

En examinant plus particulièrement les figures 1 et 2, on remarque que la stabilisation verticale du dispositif est assurée par l'intermédiaire des biellettes doubles 13 et 14 maintenues normalement alignées par l'intermédiaire du vérin 17, que la stabilisation horizontale e st obtenue par l'intermédiaire de la barre 8 et des vérins 5 montés en opposition et que la stabilisation transversale est obtenue par l'intermédiaire des vérins 12 et de l'axe 11, dont l'extrémité coulisse entre les éléments de la double traverse supérieure 3c. Nous avons donc bien ainsi amortissement des accélérations sur les trois axes, accompagné d'une possibilité de réglage de la valeur de celui-ci et de la position du cadre dans les trois plans perpendiculaires correspondants. Le montage d'un vérin 24 entre les câbles 25 de soutien des rampes et les doubles traverses supérieure et inférieure 3c et 3d permettent l'amortissement des effets d'inertie latéraux et le réglage à distance de l'inclinaison des rampes 22 et 23 par rapport au sol.

En examinant la figure 3, on remarque que l'inclinaison du cadre 3, dans le plan de déplacement du véhicule porteur, est réglable par l'intermédiaire du vérin 21.

Selon un autre mode de réalisation, le réglage de l'inclinaison du cadre 3 dans le plan de déplacement du véhicule porteur est obtenu par l'intermédiaire d'un parallélogramme déformable dont la position, par rapport aux bras 1 est réglable par l'intermédiaire d'un vérin, commandé à partir du poste de conduite du véhicule porteur. Dans ce montage, le cadre 3 constitue l'un des côtés du parallélogramme et l'articulation du côté opposé par rapport aux bras de manutention 1 est obtenue par l'intermédiaire du vérin.

Ainsi, avec ce dispositif, la stabilité des rampes de pulvérisation est assurée, quelles que soient les irrégularités du sol, par l'intermédiaire d'un système hydraulique combiné à un système aléopneumatique, à accumulateur d'azote incorporé, permettant un débattement dans tous les sens. Cette assistance aléopneumatique appliquée à l'ensemble des dispositifs mécaniques qui constituent le dispositif, permet de moduler, en rigidité et en rapidité de réponse, le débattement des rampes par réglage de la pression hydraulique ou du débit provenant du véhicule porteur, qui actionne, par ailleurs, le pulvérisateur. Par l'ensemble de ces moyens, on obtient une régularité d'avance des deux rampes, sans débattement latéral, ni cisaillement vertical de celles-ci, puisqu'elles ne sont pas liées rigidement au véhicule porteur qui, lui, épouse les irrégularités du sol. L'éffacement jusqu'à 45° de la rampe dans le plan horizontal, à gauche et à droite, permet d'éviter divers obstacles, tels que clôtures, pylônes électriques etc... La longévité de la rampe est accrue du fait de la souplesse du travail, qui est effectué sans-à-coup ; ce qui se traduit par un épandage de qualité très satisfaisante.

Le dispositif selon l'invention est destiné principalement à équiper des véhicules porteurs agricoles, munis ou non de bras de manutention, en vue de leur tranformation en engins de pulvérisation ou d'épandage.

Le mode de réalisation qui vient d'être décrit peut, selon l'invention, être complété par un dispositif de stabilisation 30, notamment vis à vis de l'amortissement des effets d'inertie latéraux et du réglage de l'inclinaison des rampes 22 et 23 par rapport au sol.

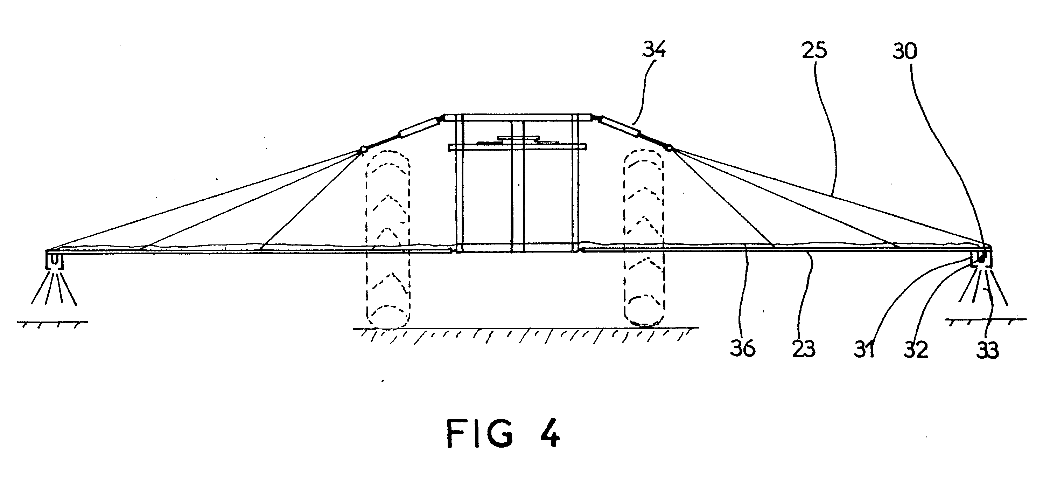

Ce dispositif est représenté figure 4. Il est constitué de buses 32 avec jupe 31, réalisant un coussin d'air 33. La pression d'air par rapport au sol est réglable et l'air sous pression est amené à l'extrémité des rampes par des canalisations souples 36 issues du véhicule porteur. On peut ainsi supprimer le vérin actif 24 au profit d'un amortisseur hydraulique 34 passif.

## Revendications

1. Dispositif de fixation et de stabilisation des rampes (22,23) pulvérisation ou d' épandage sur un véhicule porteur (2), constitué essentiellement d'un cadre (3a-3d) comportant des montants (3a,3b) assurant par l'intermédiaire de deux vérins (12) montés en opposition, la stabilité transversale dans le plan vertical,

   caractérisé en ce que le cadre (3a-3d) comporte : des doubles montants (3a, 3b) entre les éléments desquels est disposée une traverse mobile (4) reliée au véhicule porteur (2) par l'intermédiaire de vérins (5) assurant la stabilité horizontale, de tourillons (6 et 7) et d'une barre (8) montée pivotante par rapport à un axe (11) dont l'extrémité inférieure (11a) est solidaire de la traverse mobile (4) et dont l'extrémité supérieure (11b) est reliée à la double traverse supérieure (3c) du cadre (3) par l'intermédiaire desdits deux vérins (12) montés en opposition et assurant la stabilité transversale dans le plan vertical; deux biellettes doubles (13 et 14), articulées l'une par rapport à l'autre, solidaires respectivement de la traverse inférieure (3d) du cadre (3) et de la traverse mobile (4), rappelées dans l'alignement l'une de l'autre par un vérin (17) assurant la stabilité dans le plan longitudinal ; et en ce que les rampes (22,23) sont fixées au cadre (3) par l'intermédiaire d'un oeil (26), situé à chacune des extrémités de la traverse inférieure (3d) et sont reliées par l'intermédiaire de câbles-haubans (25) aux extrémités de la double traverse supérieure (3c) par l'intermédiaire de vérins (24).

2. Dispositif selon la revendication 1, caractérisé en ce que l'extrémité supérieure de l'axe (11), fixé à la traverse mobile (4), dépasse de la partie supérieure du cadre (3), après passage entre les éléments de la double traverse supérieure (3c) entre lesquels elle se déplace.

3. Dispositif selon la revendication 1, caractérisé en ce que son inclinaison est réglable par l'intermédiaire d'un vérin (21), reliant la traverse inférieure (3d) du cadre (3) au véhicule porteur (2) ou aux bras (1) de celui-ci.

4. Dispositif selon la revendication 1, caractérisé en ce que son inclinaison dans le plan longitudinal est réglable par l'intermédiaire d'un parallélogramme articulé, dont il constitue l'un des côtés, et d'un vérin assurant l'articutation du côté opposé du parallélogramme par rapport aux bras (1) du véhicule porteur (2).

5. Dispositif selon la revendication 1, caractérisé en ce que chaque extrémité des rampes (22,23) est munie d'un système de stabilisation à coussin d'air (33).

6. Dispositif selon la revendication 5, caractérisé en ce que le système de stabilisation est constitué d'une buse (32), d'une jupe (31), d'un tuyau d'alimentation (36).

## Claims

1. Device for fastening and stabilising spraying or spreading booms (22, 23) on a carrier vehicle (2), consisting essentially of a frame (3a-3b) comprising uprights (3a, 3b) providing transverse stability in the vertical plane by means of two jacks (12) mounted in opposition, characterised in that the frame (3a-3d) comprises: double uprights (3a, 3b) between the elements of which is disposed a movable Crosspiece (4) connected to the carrier vehicle (2) by means of jacks (5) providing horizontal stability, swivel joints (6 and 7) and a bar (8) mounted pivotably relative to a shaft (11) whose lower end (11a) is integral with the movable crosspiece (4) and whose upper end (11b) is connected to the double upper crosspiece (3c) of the frame (3) by means of the said two jacks (12) mounted in opposition and providing transverse stability in the vertical plane; two double. connecting rods (13 and 14), articulated to one another, integral, respectively, with the lower crosspiece (3d) of the frame (3) and with the movable crosspiece (4), brought into alignment with one another by a jack (17) providing stability in the longitudinal plane ; and in that the booms (22, 23) are fastened to the frame (3) by means of an eye (26), located at each of the ends of the lower crousspiece (3d) and are connected by means of bracing cables (25) at the ends of the double upper crosspiece (3c) by means of jacks (24).

2. Device according to Claim 1, characterised in that the upper end of the shaft (11), fastened to the movable crosspiece (4), extends beyond the upper part of the frame (3) after passing between the elements of the double upper crosspiece (3c) between which it moves.

3. Device according to Claim 1, characterised in that its tilt can be adjusted by means of a jack (21) connecting the lower crosspiece (3d) of the frame (3) to the carrier vehicle (2) or to the arms (1) of the latter.

4. Device according to Claim 1, characterised in that its tilt in the longitudinal plane can be adjusted by means of an articulated parallelogram, of which it forms one of the sides, and of a jack providing the articulation of the opposite side of the parallelogram relative to the arms (1) of the carrier vehicle (2).

5. Device according to Claim 1, characterised in that each end of the booms (22, 23) is equipped with an air-cushion stabilisation system (30).

6. Device according to Claim 5, characterised in that the stabilisation system consists of a nozzle (32), a skirt (31) and a supply pipe (36).

**Ansprüche**

1. Vorrichtung zum Befestigen und Stabilisieren von sprühoder Dungebalken (22, 23) an einem Trägerfahrzeug (2), die im wesentlichen einen Rahmen (3a - 3d) mit Pfosten (3a, 3b) umfaßt, der mittels zweier einander gegenüber angeordneter Stellelemente (12) die Querstabilität in der vertikalen Ebene gewährleistet, **dadurch gekennzeichnet,** daß der Rahmen (3a - 3d) unfaßt:

   - Doppelpfosten (3a, 3b), zwischen deren Elementen ein beweglicher Querbalken (4) angeordnet ist, der mit dem Trägerfahrzeug (2) durch Stellelemente (5), die die Horizontalstabilität sicherstellen, durch Drehzapfen (6 und 7) und durch einen Stab (8), der bezüglich einer Achse (11) drehbar befestigt ist, verbunden ist, wobei das untere Ende (11a) der Achse (11) mit dem beweglichen Querbalken (4) verbunden ist und das obere Ende (11b) mit dem oberen DoppelQuerbalken (3c) des Rahmens (3) durch die beiden einander gagenüber angeordneten Stellelemente (12) verbunden ist, die die Querstabilität in der vertikalen Ebene gewährleisten;
   - zwei Doppel-Schwenkalme (13, 14), die aneinander angelenkt sind und mit dem unteren Querbalken (3d) des Rahmens (3) bzw. dem beweglichen Querbalken (4) verbunden sind, und durch ein die Stabilität in der Längsebene gewährleistendes Stellelement (17) wieder gegeneinander ausgerichtet werden; und daß die Balken (22, 23) am Rahmen (3) über ein Auge (26) befestigt sind, das an jedem Ende des unteren Querbalkens (3d) angeordnet ist, sowie durch Spannseile (25), welche über die Stellelemente (24) an den Enden des oberen Doppel-Querbalkens (3c) angreifen.

2. Vorrichtung nach Anspruch 1, **dadurch gekennzeichnet,** daß das am beweglichen Querbalken (4) befestigte obere Ende der Achse (11) über den oberen Teil des Rahmens (3) hinausragt, nachdem es zwischen den Elementen des oberen Doppel-Querbalkens (3c), zwischen welchen es sich verschiebt, hindurchgetreten ist.

3. Vorrichtung nach Anspruch 1, **dadurch gekennzeichnet,** daß die Neigung der Vorrichtung durch ein Stellelement (21) einstellbar ist, das den unteren Querbalken (3d) des Rahmens (3) mit dem Trägerfahrzeug (2) oder den Armen (1) desselben verbindet.

4. Vorrichtung nach Anspruch 1, **dadurch gekennzeichnet,** daß die Neigung der Vorrichtung in dar Längsebene durch ein Gelenkparallelogramm einstellbar ist, dessen eine Seite von dieser gebildet wird, und durch ein Stellelement, das die Schwenkbarkeit der gegenüberliegenden Seite des Parallelogramms bezüglich der Arme (1) des Trägerfahrzeugs (2) gewährleistet.

5. Vorrichtung nach Anspruch 1, **dadurch gekennzeichnet,** daß jedes Ende der Balken (22, 23) mit einem Luftkissen-Stabilisierungssystem (30) ausgestattet ist.

6. Vorrichtung nach Anspruch 5, **dadurch gekennzeichnet,** daß das Stabilisierungssystem eine Düse (32), eine Schürze (31) und bin Zuführrohr (36) umfaßt.

# FIG.1

EP 0 261 028 B1

# FIG.2

# FIG.3

FIG 4

EP 0 261 028 B1